# EUROPEAN PATENT SPECIFICATION

(11) **EP 2 123 875 B1**
(45) Date of publication and mention of the grant of the patent: **25.04.2012**
(21) Application number: 08722814.4
(22) Date of filing: 18.03.2008
(51) Int. Cl.: F01N 3/08, B01D 53/94, F01N 3/24, F01N 3/28, F01N 3/36

(54) **EXHAUST PURIFICATION APPARATUS FOR COMPRESSION-IGNITION INTERNAL COMBUSTION ENGINE**
ABGASREINIGUNGSVORRICHTUNG FÜR EINEN KOMPRESSIONSGEZÜNDETEN VERBRENNUNGSMOTOR
APPAREIL DE PURIFICATION DES GAZ D'ÉCHAPPEMENT POUR UN MOTEUR À COMBUSTION INTERNE À ALLUMAGE PAR COMPRESSION

(30) Priority: 19.03.2007 JP 2007070020
(43) Date of publication of application: 25.11.2009
(73) Proprietor: Toyota Jidosha Kabushiki Kaisha, Toyota-shi, Aichi 471-8571 (JP)
(72) Inventor: TOSHIOKA, Shunsuke, Toyota-shi Aichi 471-8571 (JP); ODA, Tomihisa, Toyota-shi Aichi 471-8571 (JP); ITOH, Takekazu, Toyota-shi Aichi 471-8571 (JP); ITOH, Kazuhiro, Toyota-shi Aichi 471-8571 (JP); TANAI, Yutaka, Toyota-shi Aichi 471-8571 (JP)
(74) Representative: TBK
(86) International application number: PCT/JP2008/055615
(87) International publication number: WO 2008/114885

(56) References cited:
- JP-A- 11 257 125
- JP-A- 2000 161 046
- JP-A- 2001 510 260
- JP-A- 2005 264 894

## Description

### TECHNICAL FIELD

The present invention relates to an exhaust purification device of a compression ignition type internal combustion engine.

### BACKGROUND ART

Known in the art is an internal combustion engine arranging an NO_{X} selective reducing catalyst in an engine exhaust passage, arranging an oxidation catalyst in the engine exhaust passage upstream of the NO_{X} selective reducing catalyst, feeding urea to the NO_{X} selective reducing catalyst, and using the ammonia produced from the urea to selectively reduce the NO_{X} contained in the exhaust gas (for example; see Japanese Patent Publication (A) No. 2005-23921). In this internal combustion engine, the NO_{X} selective reducing catalyst adsorbs ammonia and the adsorbed ammonia reacts with the NO_{X} contained in the exhaust gas whereby the NO_{X} is reduced.

In this internal combustion engine, however, when HC is fed into the oxidation catalyst at engine startup and the heat of oxidation reaction of the HC raises the temperature of the NO_{X} selective reducing catalyst, if a large amount of HC is fed to warm up the NO_{X} selective reducing catalyst early, HC unable to be completely oxidized in the oxidation catalyst will flow into the NO_{X} selective reducing catalyst and deposit on the NO_{X} selective reducing catalyst. In this regard, the problem arises that if HC deposits on the NO_{X} selective reducing catalyst, the NO_{X} selective reducing catalyst will become unable to adsorb ammonia and thereby the NO_{X} purification rate will fall.

As opposed to this, if reducing the amount of HC so as to keep HC from adhering to the NO_{X} selective reducing catalyst, that is, to prevent the NO_{X} selective reducing catalyst from being poisoned by HC, time will be needed for the NO_{X} selective reducing catalyst to rise and therefore, in this case as well, the problem arises that the NO_{X} purification rate will fall.

Also known in the art is an exhaust emission control device (for example, see Japanese Patent Publication (A) No. 2005-264894) according to the preamble of claim 1.

### DISCLOSURE OF THE INVENTION

An object of the present invention is to provide an exhaust purification device of a compression ignition type internal combustion engine capable of obtaining a good NO_{X} purification rate at engine startup.

According to the present invention, there is provided an exhaust purification device of a compression ignition type internal combustion engine arranging an NO_{X} selective reducing catalyst in an engine exhaust passage, arranging an oxidation catalyst in the engine exhaust passage upstream of the NO_{X} selective reducing catalyst, feeding urea to the NO_{X} selective reducing catalyst, and using an ammonia produced from the urea to selectively reduce NO_{X} contained in the exhaust gas, wherein HC is fed to the oxidation catalyst at the time of engine startup to raise a temperature of the NO_{X} selective reducing catalyst with a heat of oxidation reaction of HC, and at this time, the temperature of the NO_{X} selective reducing catalyst is increased to a HC desorption temperature range where HC is desorbed from the NO_{X} selective reducing catalyst.

Increasing the temperature of the NO_{X} selective reducing catalyst to the HC desorption temperature range eliminates the HC poisoning of the NO_{X} selective reducing catalyst and thereby gives a good NO_{X} purification rate.

### BRIEF DESCRIPTION OF THE DRAWINGS

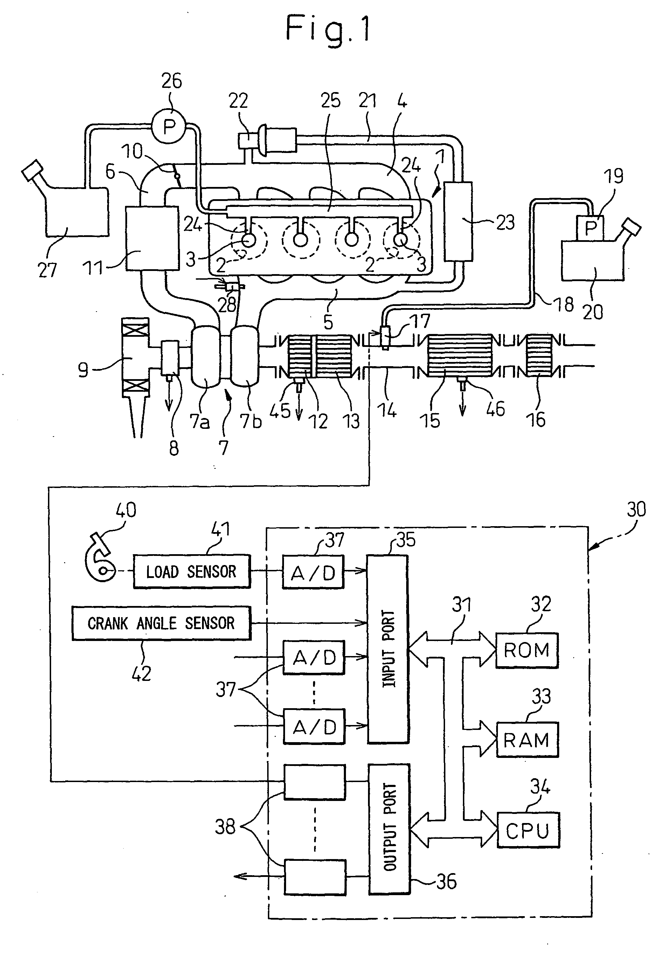

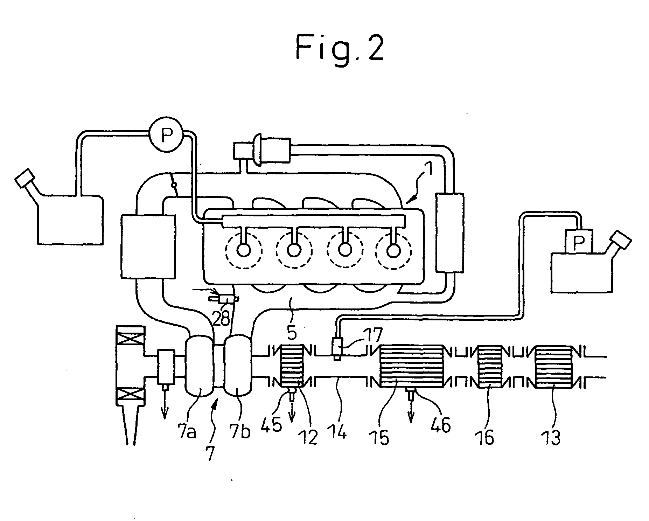

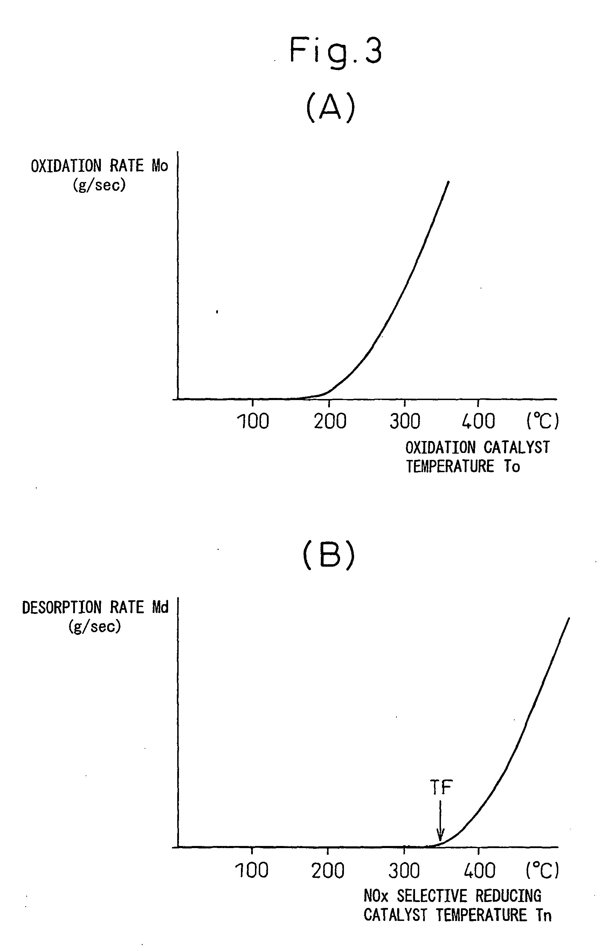

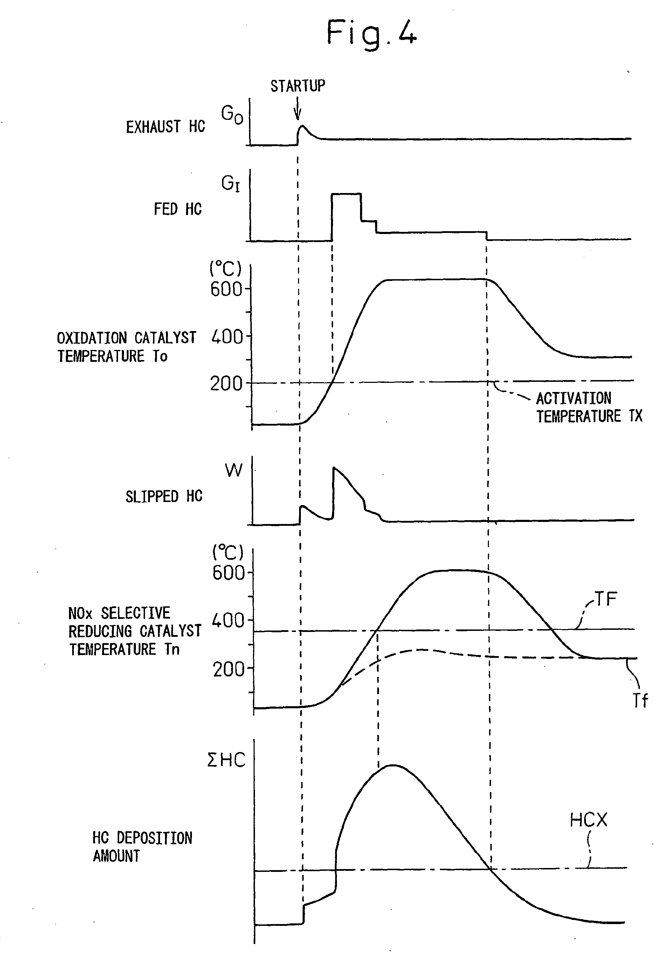

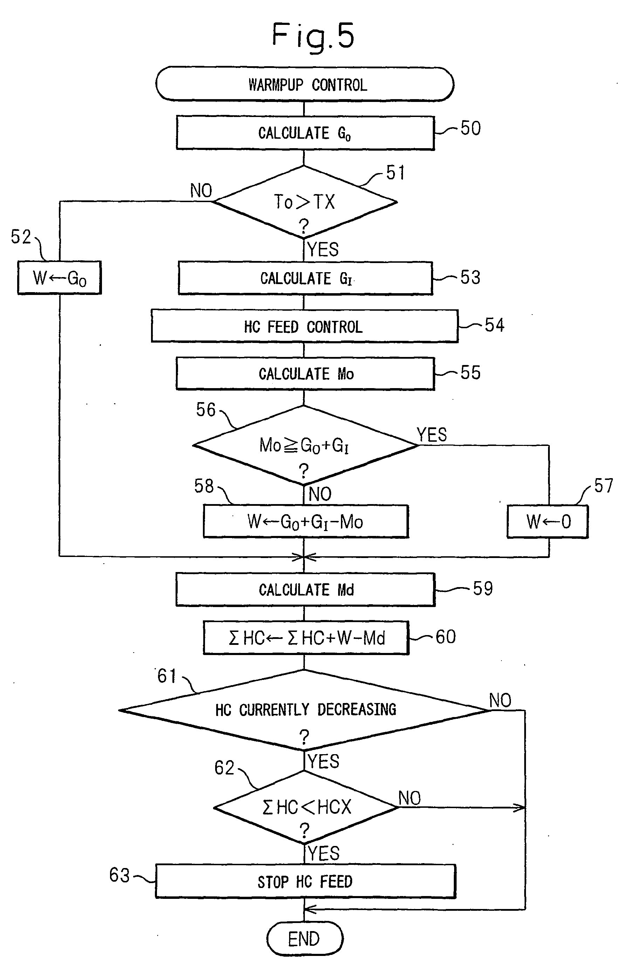

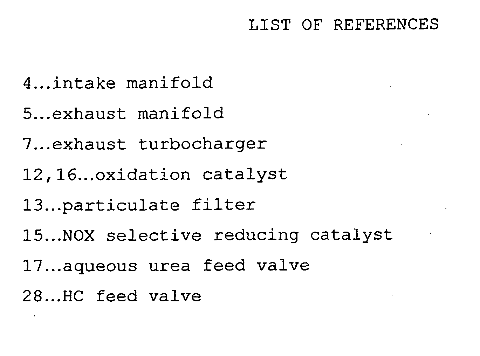

FIG. 1 is an overview of a compression ignition type internal combustion engine, FIG. 2 is an overview showing another embodiment of the compression ignition type internal combustion engine, FIG. 3 is a view showing an oxidation rate and desorption rate, FIG. 4 is a time chart showing warm-up control, and FIG. 5 is a flow chart for performing the warm-up control.

### BEST MODE FOR CARRYING OUT THE INVENTION

FIG. 1 shows an overview of a compression ignition type internal combustion engine.

Referring to FIG. 1, 1 indicates an engine body, 2 a combustion chamber of a cylinder, 3 an electronic control type fuel injector for injecting fuel into each combustion chamber 2, 4 an intake manifold, and 5 an exhaust manifold. The intake manifold 4 is connected through an intake duct 6 to the outlet of a compressor 7a of an exhaust turbocharger 7, while the inlet of the compressor 7a is connected through an intake air amount detector 8 to an air cleaner 9. Inside the intake duct 6, a throttle valve 10 driven by a step motor is arranged. Further, around the intake duct 6, a cooling device 11 for cooling the intake air flowing through the inside of the intake duct 6 is arranged. In the embodiment shown in FIG. 1, the engine cooling water is guided to the cooling device 11 where the engine cooling water cools the intake air.

On the other hand, the exhaust manifold 5 is connected to the inlet of an exhaust turbine 7b of the exhaust turbocharger 7, while the outlet of the exhaust turbine 7b is connected to the inlet of an oxidation catalyst 12. Downstream of the oxidation catalyst 12, a particulate filter 13 is arranged adjacent to the oxidation catalyst 12 for collecting particulate matter contained in the exhaust gas, while the outlet of this particulate filter 13 is connected through an exhaust pipe 14 to the inlet of an NO_{X} selective reducing catalyst 15. The outlet of this NO_{X} selective reducing catalyst 15 is connected to an oxidation catalyst 16.

Inside an exhaust pipe 14 upstream of the NO_{X} selective reducing catalyst 15, an aqueous urea solution feed valve 17 is arranged. This aqueous urea solution feed valve 17 is connected through a feed pipe 18 and a feed pump 19 to an aqueous urea solution tank 20. The aqueous urea solution stored inside the aqueous urea solution tank 20 is injected by the feed pump 19 into the exhaust gas flowing within the exhaust pipe 14 from the aqueous urea solution feed valve 17, while the ammonia ((NH₂)₂CO+H₂O→2NH₃+CO₂) generated from urea causes the NO_{X} contained in the exhaust gas to be reduced in the NO_{X} selective reducing catalyst 15.

The exhaust manifold 5 and the intake manifold 4 are connected to each other through an exhaust gas recirculation (hereinafter referred to as the "EGR") passage 21. Inside the EGR passage 21 is arranged an electronic control type EGR control valve 22. Further, around the EGR passage 21 is arranged a cooling device 23 for cooling the EGR gas flowing through the inside of the EGR passage 21. In the embodiment shown in FIG. 1, the engine cooling water is guided through the cooling device 23, where the engine cooling water is used to cool the EGR gas. On the other hand, each fuel injector 3 is connected through a fuel feed pipe 24 to a common rail 25. This common rail 25 is connected through an electronically controlled variable discharge fuel pump 26 to a fuel tank 27. The fuel stored in the fuel tank 27 is fed by the fuel pump 26 into the common rail 25, and the fuel fed to the inside of the common rail 25 is fed through each fuel pipe 24 to the fuel injectors 3. Furthermore, an HC feed valve 28 for feeding hydrocarbons, i.e., HC into the exhaust manifold 5 is arranged in the exhaust manifold 5. In the embodiment shown in Fig. 1, this HC is comprised of diesel oil.

An electronic control unit 30 is comprised of a digital computer provided with a ROM (read only memory) 32, RAM (random access memory) 33, CPU (microprocessor) 34, input port 35, and output port 36 all connected to each other by a bi-directional bus 31. A temperature sensor 45 for detecting the bed temperature of the oxidation catalyst 12 is attached to the oxidation catalyst 12, and a temperature sensor 46 for detecting the bed temperature of the NO_{X} selective reducing catalyst 15 is attached to the NO_{X} selective reducing catalyst 15. The output signals of these temperature sensors 45 and 46 and intake air amount detector 8 are input through corresponding AD converters 37 into the input port 35.

On the other hand, the accelerator pedal 40 has a load sensor 41 generating an output voltage proportional to the amount of depression L of the accelerator pedal 40 connected to it. The output voltage of the load sensor 41 is input through a corresponding AD converter 37 to the input port 35. Further, the input port 35 has a crank angle sensor 42 generating an output pulse each time the crank shaft rotates by for example 15°C connected to it. On the other hand, the output port 36 is connected through corresponding drive circuits 38 to the fuel injectors 3, throttle valve 10 drive step motor, aqueous urea solution feed valve 17, feed pump 19, EGR control valve 22, fuel pump 26, and HC feed valve 28.

The oxidation catalyst 12, for example, carries a precious metal catalyst such as platinum. This oxidation catalyst 12 performs the action of converting the NO contained in the exhaust gas to NO₂ and the action of oxidizing the HC contained in the exhaust gas. That is, NO₂ has stronger oxidation properties than NO. Therefore, if NO is converted to NO₂ the oxidation reaction of the particulate matter trapped on the particulate filter 13 is promoted. Further, the reduction action by the ammonia at the NO_{X} selective reducing catalyst 15 is promoted. On the other hand, at the NO_{X} selective reducing catalyst 15, as explained above, if HC is deposited, the adsorption amount of the ammonia will decrease, therefore the NO_{X} purification rate will fall. Accordingly, by using the oxidation catalyst 12 to oxidize the HC, the deposition of HC at the NO_{X} selective reducing catalyst 15, that is, the HC poisoning of the NO_{X} selective reducing catalyst 15, is avoided.

As the particulate filter 13, a particulate filter not carrying a catalyst may be used. For example, a particulate filter carrying, for example, a precious metal catalyst such as platinum may be used. On the other hand, the NOX selective reducing catalyst 15 is comprised of an ammonia adsorption type Fe zeolite having a high NO_{X} purification rate at low temperatures. Further, the oxidation catalyst 16 carries, for example, a precious metal catalyst comprised of platinum, and this oxidation catalyst 16 performs an action of oxidizing ammonia leaked from the NO_{X} selective reducing catalyst 15.

FIG. 2 shows another embodiment of the compression ignition type internal combustion engine. In this embodiment, the particulate filter 13 is arranged downstream of the oxidation catalyst 16, accordingly, in this embodiment, the outlet of the oxidation catalyst 12 is coupled through the exhaust pipe 14 to the inlet of the NO_{X} selective reducing catalyst 15.

If the NO_{X} selective reducing catalyst 15 does not rise in temperature a certain degree, the selective reduction action of NO_{X} will not be performed, that is, the catalyst will not be activated. Accordingly, it is necessary to activate the NO_{X} selective reducing catalyst 15 as soon as possible at engine startup. Here, in the present invention, HC is fed to the oxidation catalyst 12 at the time of engine startup so as to raise the temperature of the NO_{X} selective reducing catalyst 15 with the heat of oxidation reaction of HC. The feed of the HC may be performed, for example, by injecting fuel into the combustion chamber 2 during the exhaust stroke or by feeding HC into the engine exhaust passage. In the embodiments shown in FIG. 1 and FIG. 2, the HC is fed by injecting diesel fuel from the HC feed valve 28.

However, it is not necessarily possible to oxidize all of the HC fed in the oxidation catalyst 12 at the time of engine startup. This will be explained while referring to FIG. 3(A). FIG. 3(A) shows the relation between the bed temperature To of the oxidation catalyst 12 and the oxidation rate M_{O}(g/sec) of the HC, that is, the amount of HC able to be oxidized per unit time.

As is clear from FIG. 3(A), when the bed temperature To of the oxidation catalyst 12 is approximately 200°C or below, that is, when the oxidation catalyst 12 is not activated, the oxidation rate M_{O} is zero. Accordingly, the HC flowing into the oxidation catalyst 12 at this time will slip the oxidation catalyst 12. On the other hand, upon activation of the oxidation catalyst 12, when the amount of HC flowing into the oxidation catalyst 12 per unit time is lower than the oxidation rate M_{O} determined from the bed temperature To of the oxidation catalyst 12, all of the inflowing HC is oxidized in the oxidation catalyst 12, and when the amount of HC flowing into the oxidation catalyst 12 per unit time is greater than the oxidation rate M_{O} determined from the bed temperature of the oxidation catalyst 12, the amount by which the HC exceeds the oxidation rate M_{O} will slip the oxidation catalyst 12.

The HC slipping the oxidation catalyst 12 will flow into the NO_{X} selective reducing catalyst 15 and deposit on the NO_{X} selective reducing catalyst 15. However, this deposited HC may be desorbed from the NO_{X} selective reducing catalyst 15 by raising the temperature of the NO_{X} selective reducing catalyst 15. This will be explained while referring to FIG. 3(B).

FIG. 3(B) shows the relation between the bed temperature Tn of the NO_{X} selective reducing catalyst 15 and the desorption rate Md(g/sec) of the HC, that is, the amount of HC desorbed from the NO_{X} selective reducing catalyst 15 per unit time. As shown in FIG. 3(B), when the bed temperature Tn of the NO_{X} selective reducing catalyst 15 exceeds approximately 350°C, the desorption rate Md rises. In FIG. 3(B), the approximately 350°C indicated by TF becomes the desorption start temperature. Accordingly, by raising the bed temperature Tn of the NO_{X} selective reducing catalyst 15 to the desorption start temperature TF or above, HC can be desorbed from the NO_{X} selective reducing catalyst 15.

To raise the temperature of the NO_{X} selective reducing catalyst 15 early, a large amount of HC may be fed from the HC feed valve 28. However, if feeding a large amount of HC, HC will slip the oxidation catalyst 12 and the NO_{X} selective reducing catalyst 15 will be poisoned by HC. However, if raising the temperature of the NO_{X} selective reducing catalyst 15 to an HC desorption temperature range greater than the desorption start temperature TF, HC poisoning can be eliminated. Accordingly, in the present invention, the temperature of the NO_{X} selective reducing catalyst 15 at the time of engine startup will be raised to the HC desorption temperature range where HC is desorbed from the NO_{X} selective reducing catalyst 15.

Next, the warm-up control of the NO_{X} selective reducing catalyst 15 according to the present invention will be explained while referring to FIG. 4.

When the engine is started up, a large amount of unburned HC will be exhausted from the combustion chamber 2. Accordingly, as shown in FIG. 4, the amount Go of HC exhausted from the combustion chamber 2 at the time of engine startup will temporarily become high. Normally, the oxidation catalyst 12 is not activated at this time, so this exhaust HC slips the oxidation catalyst 12. This slipped HC is deposited on the NO_{X} selective reducing catalyst 15. Accordingly, as is clear from FIG. 4, the slipped HC amount W is added to the NO_{X} HC deposition amount ΣHC of the selective reducing catalyst 15.

Next, when the bed temperature To of the oxidation catalyst 12 exceeds the activation temperature TX, HC feed from the HC feed valve 28 will begin. Fluctuation in the HC feed amount is indicated as G_{I}. That is, the HC feed amount G_{I} is reduced little by little so that the bed temperature To of the oxidation catalyst 12 approaches the target temperature smoothly. The HC feed amount G_{I} is large, so a large amount of HC will slip the oxidation catalyst 12, but the more the bed temperature To of the oxidation catalyst 12 rises, the more the HC amount oxidized in the oxidation catalyst 12, so, as shown in FIG. 4, the slipped HC amount W will gradually decrease along with the elapse of time.

On the other hand, as the NO_{X} selective reducing catalyst 15 is heated by the exhaust gas raised in temperature in the oxidation catalyst 12, so, as shown by the solid line in FIG. 4, its temperature will rise slower than the oxidation catalyst 12. When the bed temperature Tn of the NO_{X} selective reducing catalyst 15 is lower than the desorption start temperature TF, the slipped HC amount W will be added to the HC deposition amount ΣHC, whereby the deposition amount ΣHC will gradually increase. However, when the bed temperature Tn of the NO_{X} selective reducing catalyst 15 exceeds the desorption start temperature TF, the desorption action of the HC from the NO_{X} selective reducing catalyst 15 will begin, whereby the HC deposition amount ΣHC will gradually decrease.

Next, when the HC deposition amount ΣHC is less than the set value HCX, the feed of HC is stopped. That is, in this embodiment, the HC amount deposited on the NO_{X} selective reducing catalyst 15 is calculated and the feed of HC is stopped when the calculated HC amount ΣHC becomes less than the predetermined set value HCX.

Note that, the maximum temperature limit which the bed temperature To of the NO_{X} selective reducing catalyst 15 can be raised to, when considering heat deterioration, becomes approximately 650°. Accordingly, in the embodiment of the present invention, the temperature of the NO_{X} selective reducing catalyst 15 at the time of engine startup is increased within the range of 350C° to 650°C.

On the other hand, the change of the bed temperature Tn of the NO_{X} selective reducing catalyst 15 shown by the broken line in FIG. 4 shows the change at the time of conventional temperature raising control. In the internal combustion engine, when idling operation is continued during the warm-up operation, there is a convergence temperature T_{f} which the temperature of the NO_{X} selective reducing catalyst 15 ultimately converges to. This convergence temperature T_{f} is approximately 200C° to 250C°. In a conventional temperature raising control, the bed temperature Tn of the NO_{X} selective reducing catalyst 15, as shown by the broken line, is changed to smoothly increase towards the convergence temperature T_{f}.

As opposed to this, in the present invention, it is learned that the bed temperature Tn of the NO_{X} selective reducing catalyst 15 at the time of engine startup is raised to a temperature of 350C° at least 100C° higher than the convergence temperature T_{f}.

Next, the warm-up control routine shown in FIG. 5 will be explained. Note that this control routine is executed by interruption every constant time period.

Referring to FIG. 5, first, at step 50, the exhaust HC amount Go is calculated. The exhaust HC amount Go changing based on the operation state of the engine is stored in advance in the ROM 32. Next, at step 51, it is judged whether the bed temperature To of the oxidation catalyst 12 exceeds the activation temperature TX. When T_{O}≤TF, the routine proceeds to step 52, where the slipped amount W is made the exhaust HC amount Go, then the routine proceeds to step 59.

As opposed to this, when T_{O}>TX, the routine proceeds to step 53, where the HC feed amount G_{I} is calculated. Next, at step 54, feed control for the HC from the HC feed valve 28 is performed. Next, at step 55, the oxidation rate M_{O}, as shown in FIG. 3(A), is calculated based on the bed temperature To of the oxidation catalyst 12. Next, at step 56, it is judged whether the oxidation rate M_{O} is larger than the sum (G_{O}+G₁) of the exhaust HC amount Go and the fed HC amount G₁. When M_{O}≥G_{O}+G₁, the routine proceeds to step 57, where the slipped amount W is made 0, then the routine proceeds to step 59. As opposed to this, when the M_{O}<G_{O}+G₁, the routine proceeds to step 58, where the slipped amount is made G_{O}+G₁-M_{O}, then the routine proceeds to step 59.

At step 59, the desorption rate Md shown in FIG. 3(B) is calculated based on the bed temperature Tn of the NO_{X} selective reducing catalyst 15. Next, at step 60, the slipped amount W is added to the HC deposition amount ΣHC and the desorption rate Md is subtracted from the HC deposition amount ΣHC to calculate the HC deposition amount ΣHC. Next, at step 61, it is judged whether the HC deposition amount ΣHC is still decreasing. When it is still decreasing, the routine proceeds to step 62, where it is judged whether the HC deposition amount ΣHC has become lower than the set value HCX. When ΣHC<HCX, the routine proceeds to step 63, where the feed of HC is stopped.

## Claims

1. An exhaust purification device of a compression ignition type internal combustion engine arranging an NOx selective reducing catalyst (15) in an engine exhaust passage, arranging an oxidation catalyst (12) in the engine exhaust passage upstream of the NOx selective reducing catalyst (15), feeding urea to the NOx selective reducing catalyst (15), and using an ammonia produced from the urea to selectively reduce NOx contained in an exhaust gas, **characterised by**
HC being fed into the oxidation catalyst (12) at the time of engine startup to raise a temperature of the NOx selective reducing catalyst (15) with a heat of oxidation reaction of HC, and at this time, the temperature of the NOx selective reducing catalyst (15) is increased to a HC desorption temperature range where HC is desorbed from the NOx selective reducing catalyst (15), an amount of HC deposited at the NOx selective reducing catalyst (15) being calculated, and the feed of HC being stopped when a calculated HC amount becomes less than a predetermined set value.

2. An exhaust purification device of a compression ignition type internal combustion engine as claimed in claim 1, wherein at the time of raising the temperature of the NOx selective reducing catalyst (15), the temperature of the NOx selective reducing catalyst (15) is increased to a range within 350C° to 650C°.

3. An exhaust purification device of a compression ignition type internal combustion engine as claimed in claim 1, wherein there is a convergence temperature at which the temperature of the NOx selective reducing catalyst (15) ultimately converges when an idling operation is continued during warm-up operation and wherein the temperature of the NOx selective reducing catalyst (15) at the time of raising the temperature of the NOx selective reducing catalyst (15) is increased to a temperature at least 100C° higher than the convergence temperature.

## Patentansprüche

1. Abgasreinigungsvorrichtung eines Verbrennungsmotors vom Selbstzündungstyp, die einen NOx-selektiven Reduzierungskatalysator (15) in einer Motorauspuffpassage anordnet, die einen Oxidiationskatalysator (12) in der Motorauspuffpassage stromaufwärts des NOx-selektiven Reduzierungskatalysators (15) anordnet, die Harnstoff zu dem NOx-selektiven Reduzierungskatalysator (15) zuführt und die einen Ammoniak, der von dem Harnstoff produziert wird, zum selektiven NOx reduzieren verwendet, das in einem Abgas enthalten ist, **dadurch gekennzeichnet, dass**
HC in den Oxidiationskatalysator (12) zu der Zeit des Motorstartens zugeführt wird, um eine Temperatur des NOx-selektiven Reduzierungskatalysators (15) mit einer Oxidiationsreaktionswärme von HC zu erhöhen, und zu dieser Zeit, ist die Temperatur des NOx-selektiven Reduzierungskatalysators (15) auf einen HC Desorptionstemperaturbereich erhöht, wo HC von dem NOx-selektiven Reduzierungskatalysators (15) desorbiert wird, ein Gehalt an HC, das auf dem NOx-selektiven Reduzierungskatalysators (15) abgeschieden ist, berechnet wird, und das Zuführen von HC gestoppt wird, wenn ein berechneter HC Gehalt weniger als ein vorherbestimmter Sollwert wird.

2. Abgasreinigungsvorrichtung eines Verbrennungsmotors vom Selbstzündungstyp nach Anspruch 1, wobei zu der Zeit des Erhöhens der Temperatur des NOx-selektiven Reduzierungskatalysators (15), die Temperatur des NOx-selektiven Reduzierungskatalysators (15) zu einem Bereich zwischen 350°C bis 650°C erhöht ist.

3. Abgasreinigungsvorrichtung eines Verbrennungsmotors vom Selbstzündungstyp nach Anspruch 1, wobei es eine Konvergenztemperatur gibt, bei welcher die Temperatur des NOx-selektiven Reduzierungskatalysators (15) ultimativ konvergiert, wenn eine Lehrlaufoperation während einer Aufwärmoperation weitergeführt wird und wobei die Temperatur des NOx-selektiven Reduzierungskatalysators (15) zu der Zeit des Erhöhens der Temperatur des NOx-selektiven Reduzierungskatalysators (15) zu einer Temperatur von zumindest 100°C höher als die Konvergenztemperatur erhöht ist.

## Revendications

1. Dispositif de purification des gaz d'échappement d'un moteur à combustion interne du type à allumage par compression comprenant un catalyseur (15) de réduction sélective des NOx dans un passage d'échappement du moteur, comprenant un catalyseur d'oxydation (12) dans le passage d'échappement du moteur en amont du catalyseur (15) de réduction sélective des NOx, alimentant de l'urée au catalyseur (15) de réduction sélective des NOx, et utilisant de l'ammoniac produit à partir de l'urée afin de réduire sélectivement les NOx présents dans les gaz d'échappement,
**caractérisé en ce qu'**on alimente du HC dans le catalyseur d'oxydation (12) au moment de démarrage du moteur pour élever la température du catalyseur (15) de réduction sélective des NOx avec une chaleur de réaction d'oxydation du HC, et à ce stade, la température du catalyseur (15) de réduction sélective des NOx augmente jusqu'à une plage de température de désorption du HC où le HC est désorbé du catalyseur (15) de réduction sélective des NOx, une quantité de HC déposée au niveau du catalyseur (15) de réduction sélective des NOx étant calculée, et l'alimentation de HC étant arrêtée lorsqu'une quantité de HC calculée devient inférieure à une valeur de réglage prédéterminée.

2. Dispositif de purification des gaz d'échappement d'un moteur à combustion interne du type à allumage par compression tel que revendiqué dans la revendication 1, dans lequel au moment de l'élévation de la température du catalyseur (15) de réduction sélective des NOx, la température du catalyseur (15) de réduction sélective des NOx est augmentée jusqu'à une plage allant de 350C° à 650C°.

3. Dispositif de purification des gaz d'échappement d'un moteur à combustion interne du type à allumage par compression tel que revendiqué dans la revendication 1, dans lequel il existe une température de convergence à laquelle la température du catalyseur (15) de réduction sélective des NOx converge à la fin lorsqu'un fonctionnement au ralenti se poursuit pendant l'opération de réchauffage et dans lequel la température du catalyseur (15) de réduction sélective des NOx au moment de l'élévation de la température du catalyseur (15) de réduction sélective des NOx est augmentée jusqu'à une température supérieure d'au moins 100C° à la température de convergence.
